# EUROPEAN PATENT APPLICATION

(11) **EP 4 178 003 A2**
(43) Date of publication of application: **10.05.2023**
(21) Application number: 22192497.0
(22) Date of filing: 26.08.2022
(51) Int. Cl.: H01M 10/42, H01M 10/48, H01M 50/591

(54) **BATTERY PACK**

(30) Priority: 08.11.2021 KR 20210152366
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

The battery pack includes: at least one displacement sensor disposed on one surface of a case of the battery pack and configured to measure a displacement amount of the case; and at least one temperature sensor disposed on the one surface to be spaced apart from the at least one displacement sensor, wherein the at least one displacement sensor and the at least one temperature sensor are strain gauges formed by the same process.

## Description

### BACKGROUND OF THE INVENTION

### (a) Field of the Invention

The present invention relates to a battery pack.

### (b) Description of the Related Art

A secondary battery is different from a primary battery providing only an irreversible conversion of a chemical substance into electrical energy in that the secondary battery may repeat its charging and discharging.

A low-capacity secondary battery may be used as a power supply for a small electronic device such as a mobile phone, a laptop computer or a camcorder, and a high-capacity secondary battery may be used as a power supply for a hybrid vehicle or the like.

In general, a secondary battery cell may include an electrode assembly including a positive electrode, a negative electrode and a separator interposed between the positive and negative electrodes, a case accommodating the electrode assembly, and an electrode terminal electrically connected to the electrode assembly.

An electrolyte may be injected into the case to enable charging and discharging of the battery cell through an electrochemical reaction between the positive electrode, the negative electrode and the electrolyte solution.

A shape of the case, such as a cylindrical shape or rectangular parallelepiped shape, may depend on a usage of the battery cell.

Battery swelling may occur due to the repeated charging and discharging of the secondary battery.

The battery swelling is a phenomenon in which the secondary battery swells due to a gas occurring in the secondary battery, which may be directly related to safety of the secondary battery.

The above information disclosed in this Background section is only for enhancement of understanding of the background of the invention, and therefore it may contain information that does not form the prior art that is already known in this country to a person of ordinary skill in the art.

### SUMMARY OF THE INVENTION

Embodiments of the present invention provide a battery pack having improved accuracy in measuring a displacement amount of the battery pack due to its swelling.

According to an embodiment of the present invention, a battery pack includes: at least one displacement sensor disposed on one surface of a case of the battery pack and configured to measure a displacement amount of the case; and at least one temperature sensor disposed on the one surface to be spaced apart from the at least one displacement sensor.

The at least one displacement sensor and the at least one temperature sensor are strain gauges formed by the same process.

The at least one displacement sensor and the at least one temperature sensor may be simultaneously formed on one surface of the case by using a stamping method.

The at least one displacement sensor and the at least one temperature sensor may be directly formed on one surface of the case.

The at least one displacement sensor and the at least one temperature sensor may be formed in the same layer.

The at least one displacement sensor may be disposed adjacent to a center of the battery pack, and the at least one temperature sensor may be disposed adjacent to an edge of the battery pack.

The battery pack may further include a protection circuit configured to obtain the displacement amount of the case, based on a detection signal received from the at least one displacement sensor.

The protection circuit may be configured to: obtain each resistance value of the at least one displacement sensor, based on the detection signal received from the at least one displacement sensor; obtain each resistance value of the at least one temperature sensor, based on a detection signal received from the at least one temperature sensor; and calculate the displacement amount corresponding to a position of each displacement sensor, based on a value obtained by subtracting the resistance value of any one temperature sensor from the resistance value of each displacement sensor.

According to another embodiment of the present invention, a battery pack includes: a plurality of strain gauges disposed on one surface of a case of the battery pack, to be spaced apart from one another; and a protection circuit configured to obtain at least one first resistance value, based on a detection signal received from at least one first strain gauge among the plurality of strain gauges, obtain at least one second resistance value, based on a detection signal received from at least one second strain gauge among the plurality of strain gauges, and calculate a displacement amount corresponding to each position of the at least one first strain gauge, based on a value obtained by subtracting any one of the at least one second resistance value from each of the at least one first resistance value.

The at least one first strain gauge may be disposed adjacent to a center of the battery pack, and the at least one second strain gauge may be disposed adjacent to an edge of the battery pack.

The at least one first strain gauge may be used as a displacement sensor, and the at least one second strain gauge may be used as a temperature sensor.

The protection circuit may be configured to detect a temperature of the battery pack, based on the at least one second resistance value.

The plurality of strain gauges may be formed by the same process.

At least some of the above and other features of the invention are set out in the claims.

According to the embodiments, it is possible to improve the accuracy in measuring the displacement amount of the battery pack due to its swelling.

### BRIEF DESCRIPTION OF THE DRAWINGS

FIG. 1A is a perspective view of a battery pack according to an embodiment.
FIG. 1B is a plan view of the battery pack of FIG. 1A as viewed in a z-direction.
FIG. 1C is a side view of the battery pack of FIG. 1A as viewed in a y-direction.
FIG. 2A shows a change in resistance of a strain gauge based on a displacement amount of the battery pack.
FIG. 2B shows a change in the resistance of the strain gauge based on a temperature of the battery pack.
FIG. 3 is a structure diagram of the battery pack according to an embodiment.

### DETAILED DESCRIPTION OF THE EMBODIMENTS

Hereinafter, embodiments of the present invention are described in detail with reference to the accompanying drawings. Hereinafter, the description describes effects and features of the embodiments and a method for implementing the same in detail with reference to the accompanying drawings. The same reference numerals denote the same elements in the drawings, and overlapping descriptions thereof are omitted. However, the present invention may be implemented in various forms and should not be construed as being limited to the embodiments described herein. Rather, these embodiments are provided as examples so that the present invention is thoroughly and completely understood, and will fully convey the aspects and features of the present invention to those skilled in the art.

Accordingly, the description may not describe any processes, elements or techniques deemed not necessary to those skilled in the art for the thorough understanding of the aspects and features of the present invention.

The drawings may exaggeratedly show relative sizes of elements, layers and regions for clarity.

The term "and/or" in this specification may include all combinations or any combination of a plurality of related listed items.

Usage of "may" or "may be" in describing the embodiments of the present invention may indicate "may" or "may be" in "one or more embodiments of the present invention."

In the following description of the embodiments of the present invention, a term in a singular form may include its plural form unless the context clearly indicates otherwise.

In this specification, terms including ordinal numbers such as "first," "second," "third" and the like are used to describe various components. However, these components are not limited by these terms.

These terms are used only to distinguish one component from another component.

For example, a 'first' component may be named a 'second' component and the 'second' component may also be similarly named the 'first' component, without departing from the scope of the present invention.

In this specification, when one component or layer is described as being "on, " "connected to, " or "coupled to" another component or layer, it may be "directly on" another component or layer or "connected to" and "coupled to" another component or layer interposing one or more other components or layers.

In addition, when a component or layer is described as being "between" two components or layers, it should be understood as only one component or layer between the two components or layers, or one or more other components or layers interposed between the same.

In this specification, a case where two components are electrically connected to each other may not only include a case where the two components are directly connected to each other, but also include a case where the two components are connected to each other through another component.

Another component may include a switch, a resistor, a capacitor or the like.

In describing the embodiments, an expression "to connect" may indicate "to electrically connect" when there is no expression "to directly connect."

Hereinafter, a battery pack according to an embodiment will be described in detail with reference to necessary drawings.

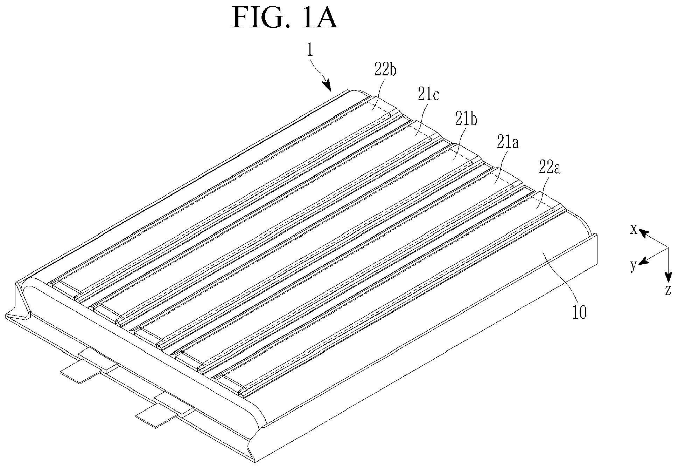

FIGS. 1A to 1C are views each schematically showing a battery pack according to an embodiment.

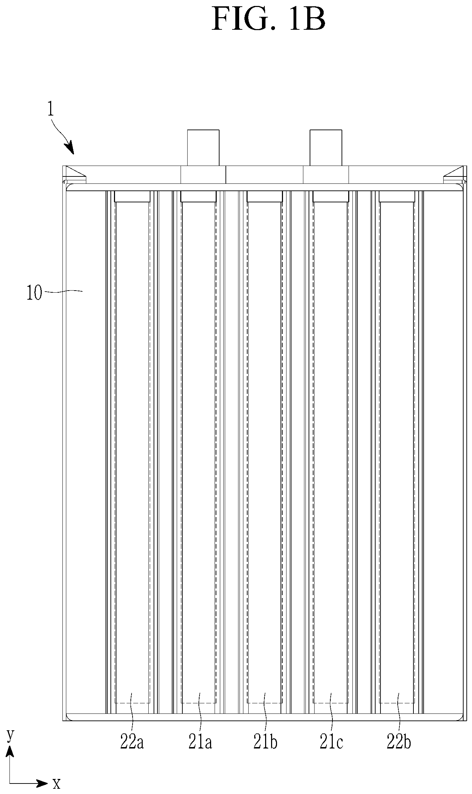

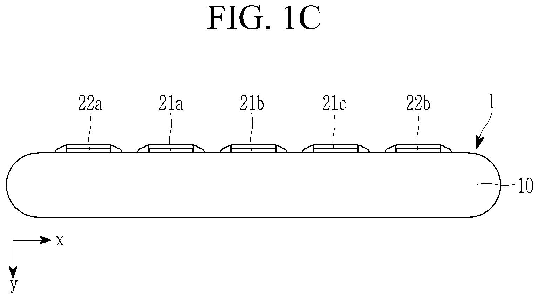

FIG. 1A is a perspective view of the battery pack, FIG. 1B is a plan view of the battery pack of FIG. 1A as viewed in a z-direction, and FIG. 1C is a side view of the battery pack of FIG. 1A as viewed in a y-direction.

Referring to FIGS. 1A to 1C, a battery pack 1 may include a case 10 accommodating at least one cell therein, and a plurality of strain gauges 21a to 21c, 22a and 22b, attached to an outer surface of the case 10.

The plurality of strain gauges 21a to 21c, 22a and 22b may be disposed to be spaced apart from one another on one surface of the case 10, and may be formed in the same layer.

In general, a resistor whose resistance value is changed when a strain is applied thereto may be formed on a polyimide film, and a thin strain gauge may then be attached to a surface of a measurement target whose displacement is to be measured through a separate adhesive member.

Meanwhile, in this embodiment, the plurality of strain gauges 21a to 21c, 22a and 22b may be directly formed on one surface of the case 10 without using any separate polyimide layer or any adhesive member.

For example, the plurality of strain gauges 21a to 21c, 22a and 22b may be directly formed on one surface of the case 10 by a stamping method using a polydimethylsiloxane (PDMS) stamp.

The plurality of strain gauges 21a to 21c, 22a and 22b may be simultaneously formed on one surface of the case 10 by using the stamping method, thereby simplifying an assembly process of the battery pack 1.

A resistor included in each of the strain gauges 21a to 21c, 22a and 22b may be made of single crystal silicon (Si).

It is difficult to deposit single crystal silicon. However, when the stamping method is used as described above, it is possible to directly form the single crystal silicon on one surface of the case 10.

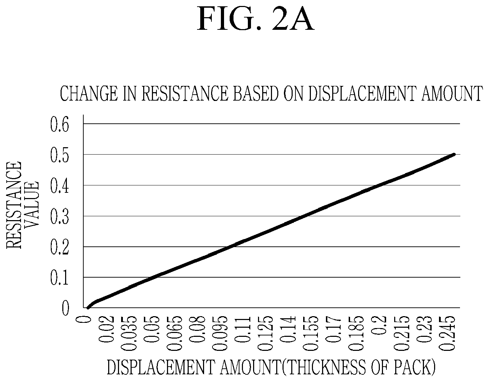

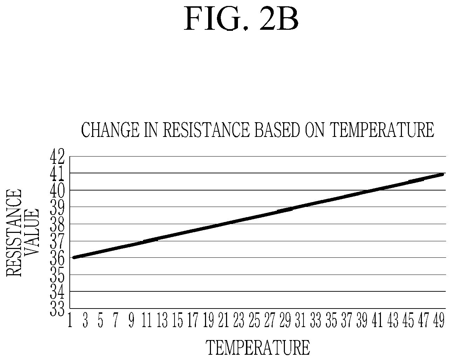

FIG. 2A shows a change in resistance of the strain gauge based on a displacement amount of the battery pack, and FIG. 2B shows a change in the resistance of the strain gauge based on a temperature of the battery pack.

Referring to FIGS. 2A and 2B, the strain gauge made of single crystal silicon (Si) may have a resistance value depending on a displacement amount of the resistor as well as a temperature thereof.

Accordingly, when the resistance value of the resistor included in the strain gauge is changed due to heat occurring from the battery pack or change in an ambient temperature of the battery pack, it may be mistakenly recognized as a change in the resistance value due to swelling of the battery pack.

Therefore, in this embodiment, at least one strain gauge 22a or 22b of the plurality of strain gauges 21a to 21c, 22a and 22b may be used as a temperature sensor for measuring the change in the resistance value based on the temperature, thereby compensating for an error occurring due to a temperature change in the resistance value measured in the remaining strain gauges 21a to 21c.

As shown in FIGS. 1A to 1C, when the small battery pack 1 including the case 10 formed in a rectangular parallelepiped shape swells, a larger displacement amount of the case 10 due to the swelling may appear toward a center of the battery pack 1.

On the other hand, an effect due to heat occurring in the battery pack 1 or its ambient temperature may have a slight deviation depending on a position of the battery cell in the case 10.

Therefore, in this embodiment, a displacement sensor measuring the displacement amount may be at least one strain gauge 21a, 21b or 21c of the plurality of strain gauges 21a to 21c, 22a and 22b, disposed adjacent to the center of the battery pack 1 and having the largest strain occurring due to the swelling on one surface of the battery pack 1.

In addition, a temperature sensor measuring a change in the resistance value of the resistor based on the temperature may be at least one strain gauge 22a or 22b disposed closest to an edge of the case 10, that is, disposed at a periphery of the battery pack, where the least strain due to the swelling occurs on one surface of the battery pack 1.

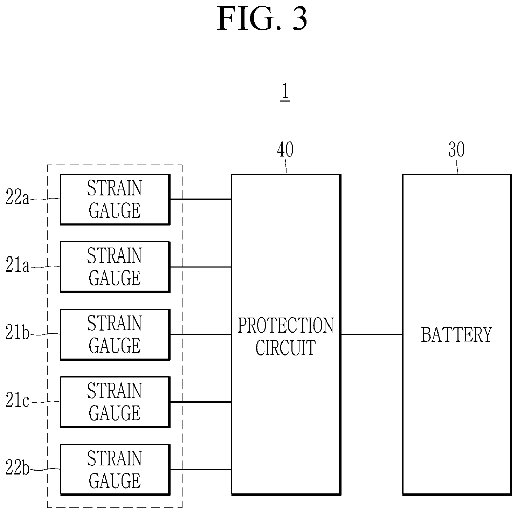

FIG. 3 is a structure diagram of the battery pack according to an embodiment.

Referring to FIG. 3, the battery pack 1 may include the plurality of strain gauges 21a to 21c, 22a and 22b, a battery 30 and a protection circuit 40.

The plurality of strain gauges 21a to 21c, 22a and 22b may be disposed to be spaced apart from one another on one surface of the case 10 of the battery pack 1 as described with reference to FIGS. 1A to 1C.

The battery 30 may include at least one cell accommodated in a space of the case 10 of the battery pack 1.

The protection circuit 40 may perform functions of controlling charge/discharge of the battery 30, protecting the battery from overvoltage, overdischarge or short circuit or the like, and balancing the cell of the battery.

In addition, the protection circuit 40 may detect the displacement amount due to the swelling of the battery pack 1 from detection signals received from the plurality of strain gauges 21a to 21c, 22a and 22b.

When receiving the detection signals from the plurality of strain gauges 21a to 21c, 22a and 22b, the protection circuit 40 may obtain each resistance value of the strain gauges 21a to 21c, 22a and 22b, based on the received detection signals.

When obtaining each resistance value of the strain gauges 21a to 21c, 22a and 22b, the protection circuit 40 may subtract the resistance value of any one of the strain gauges 22a and 22b set as the temperature sensor, from the resistance values of the strain gauges 21a to 21c set as the displacement sensors, thereby compensating for the effect due to the temperature, on the resistance values of the displacement sensors 21a to 21c.

The protection circuit 40 may then calculate the displacement amount of the battery pack 1, based on the resistance values of the displacement sensors 21a to 21c for which the effect due to the temperature is compensated.

For example, the protection circuit 40 may calculate a displacement amount of a region where the strain gauge 21b is positioned, based on a value obtained by subtracting the resistance value of the strain gauge 22a or 22b set as the temperature sensor from the resistance value of the strain gauge 21b set as the displacement sensor.

In addition, for example, the protection circuit 40 may calculate a displacement amount of a region where the strain gauge 21a is positioned, based on a value obtained by subtracting the resistance value of the strain gauge 22a set as the temperature sensor from the resistance value of the strain gauge 21a set as the displacement sensor.

In addition, for example, the protection circuit 40 may calculate a displacement amount of a region where the strain gauge 21c is positioned, based on a value obtained by subtracting the resistance value of the strain gauge 22b set as the temperature sensor from the resistance value of the strain gauge 21c set as the displacement sensor.

When calculating the displacement amount of the battery pack 1, the protection circuit 40 may perform an operation of protecting the battery pack, based on the calculated displacement amount, or transmit the calculated displacement amount to a controller of a load (not shown) in which the battery pack 1 is used as a power source.

In addition, the protection circuit 40 may obtain information on the temperature of the battery pack 1, based on the detection signal received from the strain gauges 22a and 22b set as the temperature sensors among the plurality of strain gauges 21a to 21c, 22a and 22b.

In this case, the battery pack 1 may not include a separate temperature sensor for measuring the temperature of the battery pack 1.

According to the above-described embodiment, accuracy in measuring the displacement amount may be improved by positioning the plurality of strain gauges 21a to 21c, 22a and 22b formed by the same process on the battery pack 1, and using some of the strain gauges as the temperature sensors for compensating for the temperature.

In addition, some of the plurality of strain gauges 21a to 21c, 22a and 22b formed by the same process may be used as the temperature sensors, and there may thus be no need for a separate process for mounting the temperature sensor, thereby reducing complexity in a manufacturing process of the battery pack 1.

Meanwhile, the above-described embodiment exemplifies that five strain gauges are disposed on the battery pack 1, three of the strain gauges are used as the displacement sensors and the other two strain gauges are used as the temperature sensors. However, the embodiment is not limited thereto.

The number of the strain gauges disposed on one battery pack or the number of the strain gauges used as the temperature sensor among the strain gauges disposed on one battery pack may be different according to the embodiment.

The electronic or electrical device and/or any other related device or component according to the embodiments of the present invention described herein may be implemented using any suitable hardware, firmware (e.g., an application-specific integrated circuit), software, or a combination of the software, the firmware and the hardware.

For example, various components of these devices may be formed on one integrated circuit (IC) chip or on separate IC chips.

In addition, the various components of these devices may be implemented on a flexible printed circuit film, a tape carrier package (TCP), a printed circuit board (PCB), or on one substrate.

The electrical connection or interconnection described in this specification may be implemented, for example, by wiring or conductive elements on the PCB or another type of a circuit carrier.

The conductive elements may include pins and/or metallizations, such as surface metallizations, for example, and may include conductive polymers or ceramics.

Electrical energy may also be transmitted through a wireless connection using, for example, electromagnetic radiation or light.

In addition, the various components of these devices may be a process or thread executed on one or more processors to perform the various functions described herein, executed in one or more computing devices, executing computer program instructions and interacting with another system component.

The computer program instructions may be stored in a memory which may be implemented in a computing device using a standard memory device such as a random access memory (RAM).

The computer program instructions may also be stored in another non-transitory computer readable medium such as a compact disk read only memory (CD-ROM) or a flash drive.

In addition, those skilled in the art need to appreciate that functions of various computing devices may be combined to or integrated into a single computing device, or a function of a particular computing device may be distributed across one or more other computing devices without departing from the scope of the embodiments of the present invention.

### <Description of symbols>

- 1:: battery pack
- 10:: case
- 21a to 21c, 22a and 22b:: strain gauges
- 30:: battery
- 40:: protective circuit

## Claims

1. A battery pack comprising:
at least one displacement sensor disposed on one surface of a case of the battery pack and configured to measure a displacement amount of the case; and
at least one temperature sensor disposed on the one surface to be spaced apart from the at least one displacement sensor,
wherein the at least one displacement sensor and the at least one temperature sensor are strain gauges formed by the same process.

2. The battery pack of claim 1, wherein
the at least one displacement sensor and the at least one temperature sensor are simultaneously formed on one surface of the case by using a stamping method.

3. The battery pack of claim 2, wherein
the at least one displacement sensor and the at least one temperature sensor are directly formed on one surface of the case.

4. The battery pack of any one of claims 1 to 3, wherein
the at least one displacement sensor and the at least one temperature sensor are formed in the same layer.

5. The battery pack of any one of claims 1 to 4, wherein
the at least one displacement sensor is disposed adjacent to a center of the battery pack, and
the at least one temperature sensor is disposed adjacent to an edge of the battery pack.

6. The battery pack of any one of claims 1 to 5, further comprising
a protection circuit is configured to obtain the displacement amount of the case, based on a detection signal received from the at least one displacement sensor.

7. The battery pack of claim 6, wherein
the protection circuit is configured to:
obtain each resistance value of the at least one displacement sensor, based on the detection signal received from the at least one displacement sensor;
obtain each resistance value of the at least one temperature sensor, based on a detection signal received from the at least one temperature sensor; and
calculate the displacement amount corresponding to a position of each displacement sensor, based on a value obtained by subtracting the resistance value of any one temperature sensor from the resistance value of each displacement sensor.

8. A battery pack comprising:
a plurality of strain gauges disposed on one surface of a case of the battery pack, to be spaced apart from one another; and
a protection circuit configured to obtain at least one first resistance value, based on a detection signal received from at least one first strain gauge among the plurality of strain gauges, obtain at least one second resistance value, based on a detection signal received from at least one second strain gauge among the plurality of strain gauges, and calculate a displacement amount corresponding to each position of the at least one first strain gauge, based on a value obtained by subtracting any one of the at least one second resistance value from each of the at least one first resistance value.

9. The battery pack of claim 8, wherein
the at least one first strain gauge is disposed adjacent to a center of the battery pack, and
the at least one second strain gauge is disposed adjacent to an edge of the battery pack.

10. The battery pack of claim 8 or claim 9, wherein
the at least one first strain gauge is used as a displacement sensor, and
the at least one second strain gauge is used as a temperature sensor.

11. The battery pack of claim 9 or claim 10, wherein
the protection circuit is cofigured to detect a temperature of the battery pack, based on the at least one second resistance value.

12. The battery pack of any one of claims 9 to 11, wherein
the plurality of strain gauges are formed by the same process.
